# EUROPEAN PATENT APPLICATION

(11) **EP 4 782 579 A1**
(43) Date of publication of application: **29.07.2026**
(21) Application number: 24885416.8
(22) Date of filing: 11.10.2024
(51) Int. Cl.: C25B 13/02, C25B 9/00, C25B 9/21, C25B 9/65, C25B 9/77

(54) **SEPARATOR AND ELECTROLYTIC DEVICE**

(30) Priority: 31.10.2023 JP 2023186850
(71) Applicant: Mitsubishi Heavy Industries, Ltd., Chiyoda-ku Tokyo 100-8332 (JP)
(72) Inventor: WATANABE, Yuta, Tokyo 100-8332 (JP); URASHITA, Yasutaka, Tokyo 100-8332 (JP); TODAKA, Shimpei, Tokyo 100-8332 (JP); DOMOTO, Kazuhiro, Tokyo 100-8332 (JP); TSURUMAKI, Shigeru, Tokyo 100-8332 (JP); MUKAI, Daisuke, Tokyo 100-8332 (JP); SUKENOBU,Takahiro, Tokyo 100-8332 (JP)
(74) Representative: Studio Torta S.p.A.
(86) International application number: PCT/JP2024/036528
(87) International publication number: WO 2025/094641

(57) **Abstract**

A separator according to the present disclosure comprises: a separator body having a first surface and a second surface; a first supply hole and a first discharge hole that are formed on one diagonal line of the separator body on the first surface and pass through the separator body; a plurality of first groove parts that are formed in a region between the first supply hole and the first discharge hole; a trapezoidal first diffusion flow path that spreads from the first supply hole to the first groove part and gradually expands in the width direction from the first supply hole toward the first groove part; a trapezoidal first convergence flow path that spreads from the first groove part to the first discharge part and gradually contracts in the width direction from the first groove part toward the first discharge hole; a first diffusion guide part that is provided in the first diffusion flow path and guides a fluid from the first supply hole to the first groove part; and a first convergence guide part that is provided in the first convergence flow path and guides the fluid from the first groove part to the first discharge hole.

## Description

### Technical Field

The present disclosure relates to a separator and an electrolytic device.

Priority is claimed on Japanese Patent Application No. 2023-186850, filed October 31, 2023, the content of which is incorporated herein by reference.

### Background Art

As a device for generating hydrogen, a device (electrolytic device) that electrolyzes water is known. Examples of such a device include the device described in PTL 1. In this device, water is filled in an electrolytic cell partitioned into a cathode chamber and an anode chamber by an ion exchange membrane, and power is supplied to a cathode and an anode to perform electrolysis of water. In the cathode chamber, hydrogen is generated by a reaction between water and electrons. Hydroxide ions generated by this reaction permeate through the ion exchange membrane and reach the anode chamber. In the anode chamber, oxygen and water are generated from the hydroxide ions. It is considered that a large amount of hydrogen can be obtained by continuing such a reaction.

In addition, in such a device, a plurality of electrolytic cells are arranged to improve processing capacity. A member called a plate-shaped separator is interposed between the electrolytic cells. A flow path for flowing a fluid such as water is formed on a surface of the separator. In the separator according to PTL 1, a triangular flow path is formed from a water supply hole to a recessed portion (groove portion) at a central portion in a longitudinal direction.

### Citation List

### Patent Literature

[PTL 1] Japanese Patent No. 4451954

### Summary of Invention

### Technical Problem

However, in a case where the flow path in the vicinity of the supply hole is triangular as described above, the fluid may not spread over the entire groove portion, which may cause non-uniformity. Then, the electrolysis reaction may not proceed smoothly, which may affect the amount of hydrogen generated.

The present disclosure has been made to solve the above-described problem, and an object thereof is to provide a separator and an electrolytic device that can more stably generate a large amount of hydrogen.

### Solution to Problem

In order to solve the above-described problem, a separator according to the present disclosure includes a separator body that has a rectangular plate shape and includes a first surface facing one side in a thickness direction and a second surface facing the other side in the thickness direction, a first supply hole and a first discharge hole that are formed on one diagonal line of the separator body in the first surface and that penetrate the separator body from the first surface toward the second surface, a plurality of first groove portions that are formed in a region between the first supply hole and the first discharge hole, that extend in a longitudinal direction of the separator body, and that are arranged at intervals in a width direction orthogonal to the longitudinal direction, a trapezoidal first diffusion flow path that is expanded between the first supply hole and the first groove portion and is recessed from a first surface side toward a second surface side, and in which a dimension in the width direction is gradually enlarged from the first supply hole toward the first groove portion as viewed from the first surface side, a trapezoidal first convergence flow path that is expanded between the first groove portion and the first discharge hole and is recessed from the first surface side toward the second surface side, and in which a dimension in the width direction is gradually reduced from the first groove portion toward the first discharge hole as viewed from the first surface side, a first diffusion guide portion that is provided in the first diffusion flow path and that guides a fluid from the first supply hole to the first groove portion, and a first convergence guide portion that is provided in the first convergence flow path and that guides a fluid from the first groove portion to the first discharge hole.

An electrolytic device according to the present disclosure includes an electrolytic cell stack, an electrolyte supply unit that supplies an electrolyte to the electrolytic cell stack, and a power supply unit that applies a voltage to the electrolytic cell stack in which, the electrolytic cell stack includes the above-described separators that are arranged at intervals in the thickness direction, and a plurality of electrolytic cells that are disposed one by one between two adjacent separators.

### Advantageous Effects of Invention

According to the present disclosure, it is possible to provide a separator and an electrolytic device that can more stably generate a large amount of hydrogen.

### Brief Description of Drawings

FIG. 1 is a schematic configuration diagram showing an overall configuration of an electrolytic device according to an embodiment of the present disclosure.
FIG. 2 is a diagram schematically showing a part of an electrolytic cell stack according to the embodiment of the present disclosure.
FIG. 3 is an exploded perspective view schematically showing a part of the electrolytic cell stack according to the embodiment of the present disclosure.
FIG. 4 is a plan view showing a configuration of a separator according to the embodiment of the present disclosure.
FIG. 5 is a cross-sectional view taken along line V-V of FIG. 4.
FIG. 6 is a diagram schematically showing the electrolytic cell stack according to the embodiment of the present disclosure.

### Description of Embodiments

Hereinafter, an embodiment of an electrolytic device 1 according to the present disclosure will be described with reference to the accompanying drawings. In the following description, the same reference numerals are assigned to configurations having the same or similar functions. The term "face" in the present specification means that two members overlap each other as viewed in a certain direction, and may include a case where another member (for example, another layer) is present between the two members.

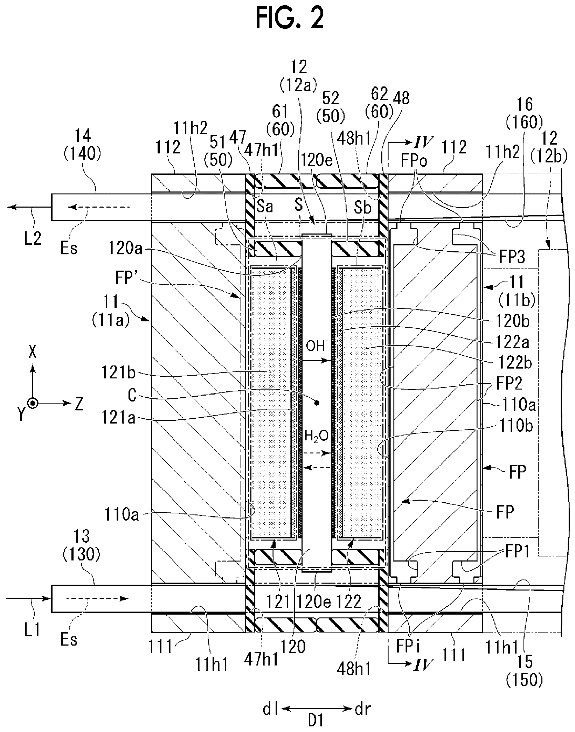

First, a Z direction, an X direction, and a Y direction are defined with reference to FIG. 2. The Z direction is a direction from a first separator 11a to a second separator 11b (right side in FIG. 2) described later. The X direction is a direction intersecting (for example, orthogonal to) the Z direction, and is a direction (up-down direction in FIG. 2) from a central portion C of an electrolytic cell 12 toward one end portion of the electrolytic cell 12. The X direction is, for example, a vertical direction. The Y direction is a direction intersecting (for example, orthogonal to) the Z direction and the X direction, and is, for example, a paper depth direction in FIG. 2. The term "outer shape size" in the present specification means an outer shape size as viewed in the Z direction.

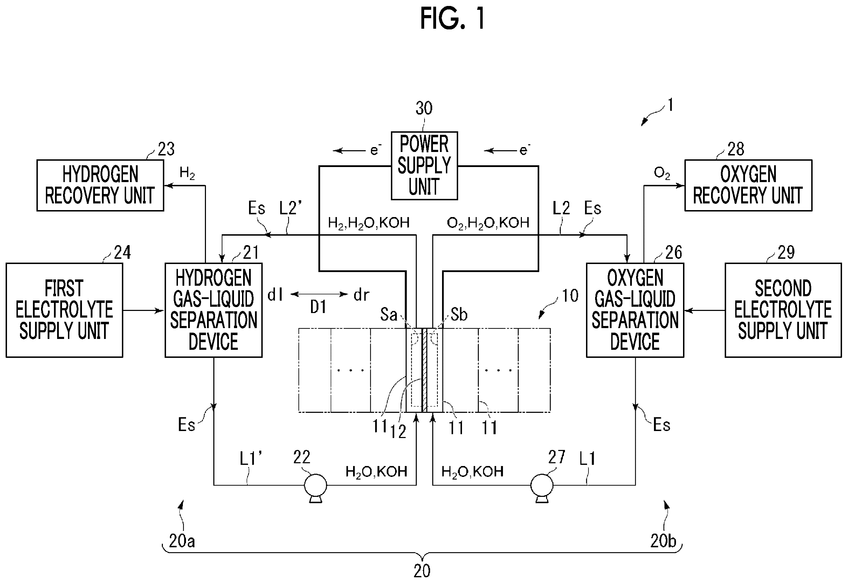

FIG. 1 is a schematic configuration diagram showing an overall configuration of the electrolytic device 1 according to a first embodiment. The electrolytic device 1 is, for example, a device that generates hydrogen by electrolyzing water contained in an electrolyte. The electrolytic device 1 is, for example, an electrolytic device of an anion exchange membrane (AEM) type. However, the electrolytic device 1 is not limited to the above example, and may be a different type of electrolytic device such as an electrolytic device of a proton exchange membrane (polymer electrolyte membrane (PEM)) type or a device that electrolytically reduces carbon dioxide.

The electrolytic device 1 includes, for example, an electrolytic cell stack 10, an electrolyte supply unit 20, and a power supply unit 30.

### (Electrolytic Cell Stack)

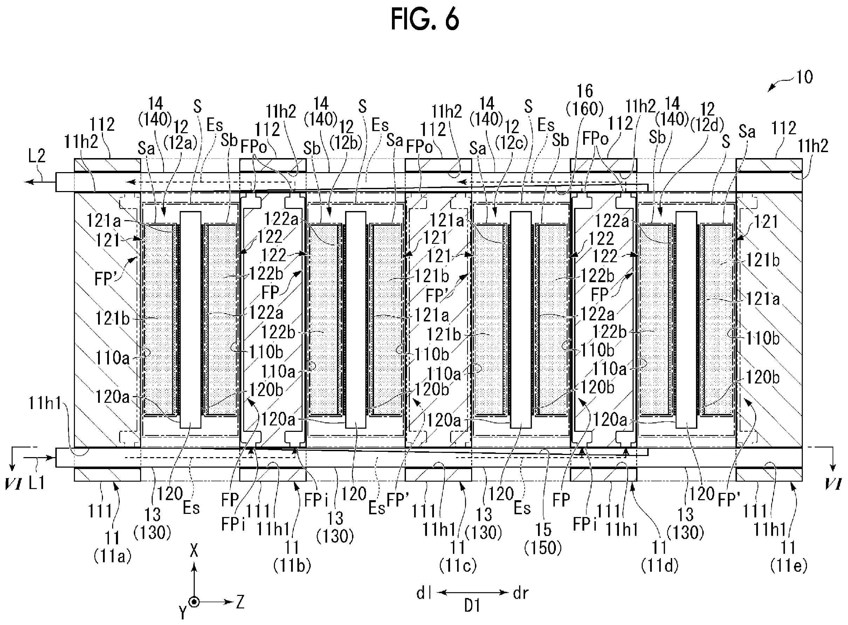

The electrolytic cell stack 10 electrolyzes an electrolyte Es supplied from the outside. The electrolytic cell stack 10 is an aggregate of a plurality of separators 11 and a plurality of electrolytic cells 12. The electrolytic cell stack 10 is formed by arranging the plurality of separators 11 and the plurality of electrolytic cells 12 in one direction. In the present embodiment, a case where the five separators 11 and the four electrolytic cells 12 are arranged to form the electrolytic cell stack 10 will be described as an example (see FIG. 6).

Hereinafter, the one direction (left-right direction in FIG. 6) in which the plurality of separators 11 and the plurality of electrolytic cells 12 are arranged is referred to as a "first direction D1". In addition, one side (left side in FIG. 6) in the first direction D1 is simply referred to as "one side dl", and a side opposite to the one side dl is referred to as "the other side dr". In addition, hereinafter, for convenience of description, the five separators 11 may be referred to in order from the one side dl as a "first separator 11a", a "second separator 11b", a "third separator 11c", a "fourth separator 11d", and a "fifth separator 11e". In addition, the four electrolytic cells 12 may be referred to in order from the one side dl as a "first electrolytic cell 12a", a "second electrolytic cell 12b", a "third electrolytic cell 12c", and a "fourth electrolytic cell 12d".

As shown in FIG. 1, the electrolytic cell stack 10 includes the plurality (four) of electrolytic cells 12 that form a cathode chamber Sa and an anode chamber Sb together with the separator 11, first flow path portions 13 and 13' (described later) that flows the electrolyte Es supplied from the electrolyte supply unit 20 toward the cathode chamber Sa and the anode chamber Sb, and second flow path portions 14 and 14' (described later) that flows (returns) the electrolyte that has reacted in the cathode chamber Sa and the anode chamber Sb toward the electrolyte supply unit 20. The electrolytic cell stack 10 will be described in detail later. The number of separators 11 and the number of electrolytic cells 12 are not limited to the above numbers. Each electrolytic cell 12 includes the cathode chamber Sa and the anode chamber Sb. The electrolytic cell 12 will be described in detail later.

### (Electrolyte Supply Unit)

The electrolyte supply unit 20 is a supply unit that supplies the electrolyte Es to each electrolytic cell 12. The electrolyte Es is, for example, pure water or an alkaline aqueous solution. The electrolyte supply unit 20 includes a cathode-side supply unit 20a and an anode-side supply unit 20b.

The cathode-side supply unit 20a is a supply unit that supplies the electrolyte Es to the cathode chamber Sa of each electrolytic cell 12. The cathode-side supply unit 20a includes, for example, a hydrogen gas-liquid separation device 21, a first pump 22, a hydrogen recovery unit 23, a first electrolyte supply unit 24, and pipe lines L1' and L2'.

The hydrogen gas-liquid separation device 21 stores the electrolyte Es. A supply port of the hydrogen gas-liquid separation device 21 is connected to the cathode chamber Sa of the electrolytic cell 12 via the pipe line L1'. The first pump 22 is provided in the middle of the pipe line L1', and sends the electrolyte Es stored in the hydrogen gas-liquid separation device 21 toward the cathode chamber Sa of the electrolytic cell 12.

A return port of the hydrogen gas-liquid separation device 21 is connected to the cathode chamber Sa of the electrolytic cell 12 via the pipe line L2'. The electrolyte Es containing hydrogen generated in the electrolytic cell 12 flows from the electrolytic cell 12 into the hydrogen gas-liquid separation device 21. The hydrogen gas-liquid separation device 21 includes a gas-liquid separation unit that separates hydrogen contained in the electrolyte Es. The hydrogen separated from the electrolyte Es by the hydrogen gas-liquid separation device 21 is recovered by the hydrogen recovery unit 23. The electrolyte Es is replenished to the hydrogen gas-liquid separation device 21 from the first electrolyte supply unit 24.

On the other hand, the anode-side supply unit 20b is a supply unit that supplies the electrolyte Es to the anode chamber Sb of each electrolytic cell 12. The anode-side supply unit 20b includes, for example, an oxygen gas-liquid separation device 26, a second pump 27, an oxygen recovery unit 28, a second electrolyte supply unit 29, and pipe lines L1 and L2.

The oxygen gas-liquid separation device 26 stores the electrolyte Es. A supply port of the oxygen gas-liquid separation device 26 is connected to the anode chamber Sb of the electrolytic cell 12 via the pipe line L1. The second pump 27 is provided in the middle of the pipe line L1, and sends the electrolyte Es stored in the oxygen gas-liquid separation device 26 toward the anode chamber Sb of the electrolytic cell 12.

A return port of the oxygen gas-liquid separation device 26 is connected to the anode chamber Sb of the electrolytic cell 12 via the pipe line L2. The electrolyte Es containing oxygen generated in the electrolytic cell 12 flows from the electrolytic cell 12 into the oxygen gas-liquid separation device 26. The oxygen gas-liquid separation device 26 includes a gas-liquid separation unit that separates oxygen contained in the electrolyte Es. The oxygen separated from the electrolyte Es by the oxygen gas-liquid separation device 26 is recovered by the oxygen recovery unit 28. The electrolyte Es is replenished to the oxygen gas-liquid separation device 26 from the second electrolyte supply unit 29.

### (Power Supply Unit)

The power supply unit 30 is a direct current power supply device that applies a voltage to each separator 11 of the electrolytic cell stack 10. The power supply unit 30 applies a direct current voltage required for the electrolysis of the electrolyte Es between the anode 122 and the cathode 121 of each electrolytic cell 12 by applying a voltage to each separator 11 in the first direction D1.

### (Configuration of Electrolytic Cell Stack)

Next, the electrolytic cell stack 10 will be described in detail with reference to FIGS. 2 to 6. FIG. 2 is a diagram schematically showing a part of the electrolytic cell stack 10. In FIG. 2, the electrolytic cell 12 (first electrolytic cell 12a) disposed closest to the one side dl among the electrolytic cells 12 arranged in the first direction D1 (left-right direction in FIG. 2) is shown.

As shown in FIGS. 2 and 6, the electrolytic cell stack 10 includes, for example, the plurality of separators 11 and the plurality of electrolytic cells 12.

### (Separator)

The separator 11 is a member that defines an internal space S in which the electrolytic cell 12 is disposed. The internal space S is a space including the cathode chamber Sa and the anode chamber Sb described later. The separator 11 has, for example, a rectangular plate shape as viewed from the first direction D1, and is formed of a metal member or the like. The separators 11 are arranged at intervals in the first direction D1.

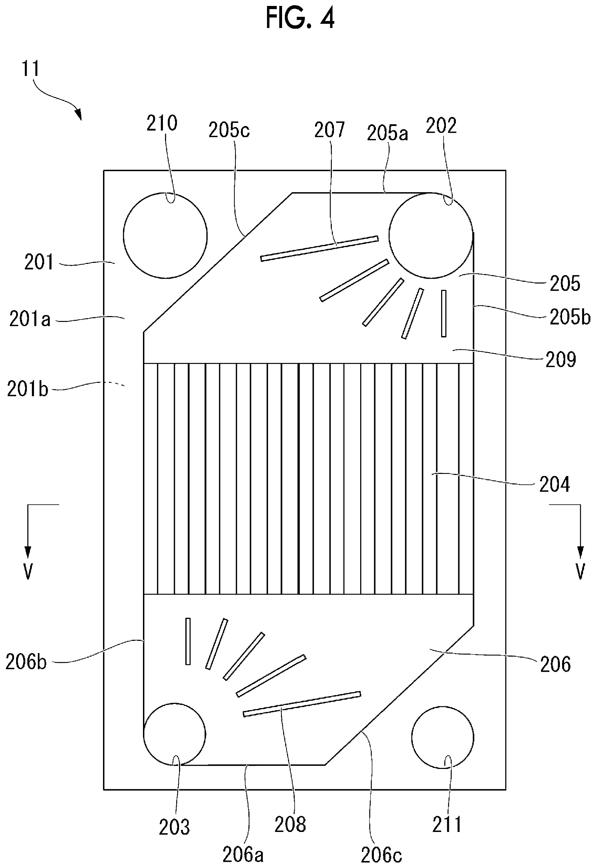

The separator 11 has a first surface 201a facing one side in a thickness direction and a second surface 201b facing the other side in the thickness direction. The configurations (described later) of the first surface 201a and the second surface 201b are point-symmetrical with respect to a geometric centroid position of the separator 11. Hereinafter, the configuration on a first surface 201a side will be described representatively with reference to FIG. 4.

The separator 11 includes a rectangular plate-shaped separator body 201, a first supply hole 203, a first discharge hole 202, a first groove portion 204, a first diffusion flow path 206, a first convergence flow path 205, a first diffusion guide portion 208, a first convergence guide portion 207, a straight section 209, a second supply hole 211, a second discharge hole 210, and a second groove portion 212.

The first supply hole 203 and the first discharge hole 202 are disposed at each corner portion along one of two diagonal lines connecting the corner portions of the rectangular separator body 201. The first supply hole 203 and the first discharge hole 202 are circular holes that penetrate the separator body 201 from the first surface side toward a second surface side. A diameter dimension of the first discharge hole 202 is set to be larger than a diameter dimension of the first supply hole 203. In addition, the second supply hole 211 and the second discharge hole 210 are provided at each corner portion along the other of the two diagonal lines connecting the corner portions of the separator body 201.

The first groove portion 204, the first diffusion flow path 206, the first convergence flow path 205, the first diffusion guide portion 208, and the first convergence guide portion 207 are formed only on the first surface 201a. The first groove portion 204 is formed in a region between the first supply hole 203 and the first discharge hole 202. The plurality of first groove portions 204 extend in a longitudinal direction of the separator body 201 and are arranged at intervals in a width direction orthogonal to the longitudinal direction. The first groove portion 204 has a cross-sectional rectangular shape that is recessed from the first surface 201a side toward the second surface 201b side.

The first diffusion flow path 206 is expanded between the first supply hole 203 and the first groove portion 204 and is recessed from the first surface 201a side toward the second surface 201b side to form a flow path. The first diffusion flow path 206 has a trapezoidal shape in which a dimension in the width direction is gradually enlarged from the first supply hole 203 toward the first groove portion 204 as viewed from the first surface 201a side. More specifically, the first diffusion flow path 206 is defined by a first side portion 206a that extends in the width direction from an edge of the first supply hole 203, a second side portion 206b that extends in a direction (the above-described longitudinal direction) orthogonal to the first side portion 206a, and a hypotenuse 206c that faces the second side portion 206b in the width direction. The hypotenuse 206c extends in a direction in which the first supply hole 203 is spaced from one side in the longitudinal direction toward the other side. An angle formed by the hypotenuse 206c with respect to the width direction is desirably 24° or more and 50° or less. More desirably, the angle is 30° or more and 45° or less. Most desirably, the angle is 35° or more and 40° or less.

The first diffusion guide portion 208 is provided in the first diffusion flow path 206. The plurality of first diffusion guide portions 208 protrude from the first surface 201a and are provided in a radial shape around the first supply hole 203. The angle formed with respect to the width direction is smaller as the first diffusion guide portion 208 is spaced from the first supply hole 203. In addition, the dimension of the first diffusion guide portion 208 in the longitudinal direction is larger as the first diffusion guide portion 208 is spaced.

A straight section 209 is provided between the first convergence flow path 205 and the first groove portion 204. In the straight section 209, the dimension in the width direction is constant over the entire longitudinal direction. In addition, the dimension of the straight section 209 in the longitudinal direction is desirably about 25 mm.

The first convergence flow path 205 is expanded between the first groove portion 204 and the first discharge hole 202 and is recessed from the first surface 201a side toward the second surface 201b side to form a flow path. The first convergence flow path 205 has a trapezoidal shape in which a dimension in the width direction is gradually enlarged from the first discharge hole 202 toward the first groove portion 204 as viewed from the first surface 201a side.

The first convergence guide portion 207 is provided in the first convergence flow path 205. The plurality of first convergence guide portions 207 protrude from the first surface 201a and are provided in a radial shape around the first discharge hole 202. The angle formed with respect to the width direction is smaller as the first convergence guide portion 207 is spaced from the first discharge hole 202. In addition, the dimension of the first convergence guide portion 207 in the longitudinal direction is larger as the first convergence guide portion 207 is spaced.

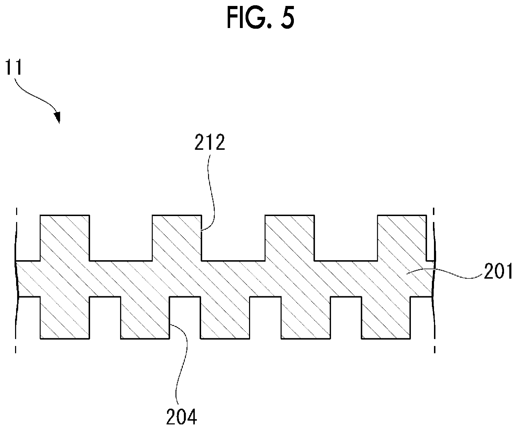

As shown in FIG. 5, the second groove portion 212 is formed on the second surface 201b side. The second groove portion 212 is a recessed groove having a rectangular cross-sectional shape, similarly to the first groove portion 204 on the first surface 201a side. On the other hand, a dimension of the second groove portion 212 in the width direction is set to be larger than a dimension of the first groove portion 204 in the width direction. It is desirable that the dimension of the second groove portion 212 in the width direction is twice the dimension of the first groove portion 204 in the width direction.

The separator 11 other than the separator 11 (fifth separator 11e) disposed closest to the other side dr among the plurality of separators 11 has a first inner surface 110a facing the one side dl in the internal space S. That is, the first inner surface 110a faces the other side dr (right side in FIGS. 2 and 6). The separator 11 other than the separator 11 (first separator 11a) disposed closest to the one side dl among the plurality of separators 11 has a second inner surface 110b facing the other side dr in the internal space S. That is, the second inner surface 110b faces the one side dl (left side in FIGS. 2 and 6).

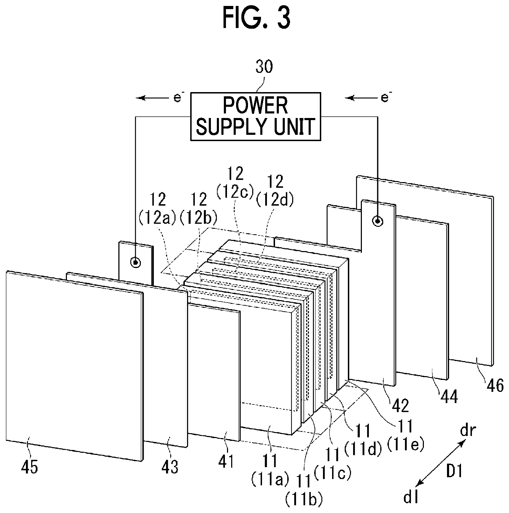

In the plurality (five) of separators 11, a negative voltage is applied from the power supply unit 30 to the first separator 11a, the third separator 11c, and the fifth separator 11e, for example, via a first collector 41 (see FIG. 3) described later. On the other hand, a positive voltage is applied from the power supply unit 30 to the second separator 11b and the fourth separator 11d, for example, via a second collector 42 (see FIG. 3) described later. The two separators 11 adjacent to each other in the first direction D1 form an electrolytic cell 12 as a pair of separators 11.

### (Electrolytic Cell)

The electrolytic cell (membrane electrode assembly (MEA)) 12 is a structure in which an ion exchange membrane, a catalyst, a power feeder, and the like are laminated and assembled. The electrolytic cell 12 is disposed one by one between two adjacent separators 11 to connect the two adjacent separators 11 to each other in the first direction D1. Therefore, the electrolytic cell 12 is located in the internal space S between the two adjacent separators 11. The electrolytic cell 12 includes, for example, an ion exchange membrane 120, a cathode 121, and an anode 122.

### (Ion Exchange Membrane)

The ion exchange membrane 120 is a membrane that selectively transmits ions. The ion exchange membrane 120 is, for example, a solid polymer electrolyte membrane. The ion exchange membrane 120 is, for example, an anion exchange membrane (AEM) having hydroxide ion conductivity. However, the ion exchange membrane 120 is not limited to the above example, and may be a proton exchange membrane (polymer electrolyte membrane (PEM)) having proton conductivity of a type different from the above example.

The ion exchange membrane 120 has, for example, a rectangular sheet shape. An outer shape size of the ion exchange membrane 120 is, for example, smaller than an outer shape size of the separator 11 adjacent to each other in the first direction D1. The ion exchange membrane 120 is disposed between the two separators 11 adjacent to each other in the first direction D1 and is located in the internal space S. The ion exchange membrane 120 has a first surface 120a facing the first inner surface 110a of the separator 11 located on the one side dl with respect to the ion exchange membrane 120, and a second surface 120b located on a side opposite to the first surface 120a. The first surface 120a of the ion exchange membrane 120 faces the one side dl. The second surface 120b of the ion exchange membrane 120 faces the other side dr. The second surface 120b of the ion exchange membrane 120 faces the second inner surface 110b of the separator 11 located on the other side dr with respect to the ion exchange membrane 120.

In the internal space S, the cathode chamber Sa or the anode chamber Sb is defined between the first surface 120a of the ion exchange membrane 120 and the first inner surface 110a of the separator 11, and between the second surface 120b of the ion exchange membrane 120 and the second inner surface 110b of the separator 11. Specifically, the cathode chamber Sa is defined between the first surface 120a of the ion exchange membrane 120 of the first electrolytic cell 12a and the first inner surface 110a of the first separator 11a, and between the first surface 120a of the ion exchange membrane 120 of the third electrolytic cell 12c and the first inner surface 110a of the third separator 11c. In addition, the anode chamber Sb is defined between the second surface 120b of the ion exchange membrane 120 of the first electrolytic cell 12a and the second inner surface 110b of the second separator 11b, and between the second surface 120b of the ion exchange membrane 120 of the third electrolytic cell 12c and the second inner surface 110b of the fourth separator 11d.

In addition, the anode chamber Sb is defined between the first surface 120a of the ion exchange membrane 120 of the second electrolytic cell 12b and the first inner surface 110a of the second separator 11b, and between the first surface 120a of the ion exchange membrane 120 of the fourth electrolytic cell 12d and the first inner surface 110a of the fourth separator 11d. On the other hand, the cathode chamber Sa is defined between the second surface 120b of the ion exchange membrane 120 of the second electrolytic cell 12b and the second inner surface 110b of the third separator 11c, and between the second surface 120b of the ion exchange membrane 120 of the fourth electrolytic cell 12d and the second inner surface 110b of the fifth separator 11e.

In the cathode chamber Sa, in a case where a voltage is applied to the electrolytic cell 12, a chemical reaction shown in (Chem. 1) occurs, and hydrogen is generated from the electrolyte Es. The term "XX is generated" in the present specification may include a case where another substance is simultaneously generated with the generation of XX. Hydroxide ions generated in the cathode chamber Sa pass through the electrolytic cell 12 and move from the cathode chamber Sa to the anode chamber Sb.

2H₂O + 2e⁻ → H₂ + 2OH⁻ ... (Chem. 1)

On the other hand, in the anode chamber Sb, in a case where a voltage is applied to the electrolytic cell 12, a chemical reaction shown in (Chem. 2) occurs, and oxygen is generated from the electrolyte Es.

2OH⁻ → 1/2O₂ + H₂O + 2e⁻ ... (Chem. 2)

As a result, in a case of viewing the entire electrolytic cell 12, a chemical reaction shown in (Chem. 3) occurs.

H₂O → H₂ + 1/2O₂ ... (Chem. 3)

The ion exchange membrane 120 may be an example of a membrane having high ion conductivity, in which a polystyrene-based or tetraphenyl-based composition is included in a main chain, and an imidazolium group or a quaternary ammonium group is included in a side chain. On the other hand, instead of this, the ion exchange membrane 120 may be an example of a membrane having high oxidation resistance, in which a polysulfone-based or bromobutyl styrene-based composition is included.

### (Cathode)

The cathode 121 is disposed between the ion exchange membrane 120 and the separator 11, and is interposed between the ion exchange membrane 120 and the separator 11. The cathode 121 includes, for example, a cathode catalyst layer 121a and a cathode power feeder 121b.

The cathode catalyst layer 121a is a layer that promotes the chemical reaction in the cathode chamber Sa described above. The cathode catalyst layer 121a has, for example, a rectangular sheet shape. The cathode catalyst layer 121a is disposed in the cathode chamber Sa and is fixed to the ion exchange membrane 120 by, for example, surface pressure bonding.

Specifically, the cathode catalyst layer 121a of the first electrolytic cell 12a and the cathode catalyst layer 121a of the third electrolytic cell 12c are fixed to the first surface 120a of the ion exchange membrane 120 by, for example, surface pressure bonding. The cathode catalyst layer 121a of the second electrolytic cell 12b and the cathode catalyst layer 121a of the fourth electrolytic cell 12d are fixed to the second surface 120b of the ion exchange membrane 120 by, for example, surface pressure bonding. A negative voltage is applied to each of the cathode catalyst layers 121a from the power supply unit 30 via the separator 11 and the cathode power feeder 121b.

The material of the cathode catalyst layer 121a may be any material that promotes the chemical reaction in the cathode chamber Sa described above, and various materials can be used. For example, the cathode catalyst layer 121a includes one or more of nickel, a nickel alloy, a cerium oxide, a lanthanum oxide, or platinum. The term "OO oxide" in the present specification may include a material other than OO and oxygen. The cathode catalyst layer 121a may include a material other than the above-described material, such as carbon. An outer shape size of the cathode catalyst layer 121a is, for example, smaller than an outer shape size of the ion exchange membrane 120.

The cathode power feeder 121b is an electrical connection portion that transmits a voltage applied to the separator 11 to the cathode catalyst layer 121a. The cathode power feeder 121b is disposed in the cathode chamber Sa. The cathode power feeder 121b is located between the separator 11 and the cathode catalyst layer 121a.

Specifically, the cathode power feeder 121b of the first electrolytic cell 12a is joined to each of the first inner surface 110a of the first separator 11a and the cathode catalyst layer 121a, and the cathode power feeder 121b of the third electrolytic cell 12c is joined to each of the first inner surface 110a of the third separator 11c and the cathode catalyst layer 121a. The cathode power feeder 121b of the second electrolytic cell 12b is joined to each of the second inner surface 110b of the third separator 11c and the cathode catalyst layer 121a, and the cathode power feeder 121b of the fourth electrolytic cell 12d is joined to each of the second inner surface 110b of the fifth separator 11e and the cathode catalyst layer 121a.

The cathode power feeder 121b has a structure in which the inside is allowed to be passed through by the electrolyte Es and a gas. The cathode power feeder 121b is formed of, for example, a metal mesh structure, a sintered body, a fiber, or the like. In the present embodiment, the outer shape size of the cathode power feeder 121b is, for example, the same as the outer shape size of the cathode catalyst layer 121a.

### (Anode)

The anode 122 is disposed between the ion exchange membrane 120 and the separator 11, and is interposed between the ion exchange membrane 120 and the second separator 11b. The anode 122 includes, for example, an anode catalyst layer 122a and an anode power feeder 122b.

The anode catalyst layer 122a is a layer that promotes the chemical reaction in the anode chamber Sb described above. The anode catalyst layer 122a has, for example, a rectangular sheet shape. The anode catalyst layer 122a is disposed in the anode chamber Sb and is fixed to the ion exchange membrane 120 by, for example, surface pressure bonding.

Specifically, the anode catalyst layer 122a of the first electrolytic cell 12a and the anode catalyst layer 122a of the third electrolytic cell 12c are fixed to the second surface 120b of the ion exchange membrane 120 by, for example, surface pressure bonding. The anode catalyst layer 122a of the second electrolytic cell 12b and the anode catalyst layer 122a of the fourth electrolytic cell 12d are fixed to the first surface 120a of the ion exchange membrane 120 by, for example, surface pressure bonding. A positive voltage is applied to each of the anode catalyst layers 122a from the power supply unit 30 via the separator 11 and the anode power feeder 122b.

The material of the anode catalyst layer 122a may be any material that promotes the chemical reaction in the anode chamber Sb described above, and various materials can be used. For example, the anode catalyst layer 122a includes one or more of nickel, a nickel alloy, a nickel oxide, a copper oxide, an iridium oxide, a niobium oxide, a lead oxide, or a bismuth oxide. As described above, the term "XX oxide" in the present specification may include a material other than XX and oxygen. For example, the "nickel oxide" may include a material other than nickel and oxygen, such as iron or cobalt. In addition, the "copper oxide" may include a material other than copper and oxygen, such as cobalt. The "iridium oxide" may include a material other than iridium and oxygen, such as ruthenium. The "lead oxide" may include a material other than lead and oxygen, such as ruthenium. The "bismuth oxide" may include a material other than bismuth and oxygen, such as ruthenium.

The anode power feeder 122b is an electrical connection portion that transmits a voltage applied to the separator 11 to the anode catalyst layer 122a. The anode power feeder 122b is disposed in the anode chamber Sb. The anode power feeder 122b is located between the separator 11 and the anode catalyst layer 122a.

Specifically, the anode power feeder 122b of the first electrolytic cell 12a is joined to each of the second inner surface 110b of the second separator 11b and the anode catalyst layer 122a, and the anode power feeder 122b of the third electrolytic cell 12c is joined to each of the second inner surface 110b of the fourth separator 11d and the anode catalyst layer 122a. The anode power feeder 122b of the second electrolytic cell 12b is joined to each of the first inner surface 110a of the second separator 11b and the anode catalyst layer 122a, and the anode power feeder 122b of the fourth electrolytic cell 12d is joined to each of the first inner surface 110a of the fourth separator 11d and the anode catalyst layer 122a.

The anode power feeder 122b has a structure in which the inside is allowed to be passed through by the electrolyte Es and a gas. The anode power feeder 122b is formed of, for example, a metal mesh structure, a sintered body, a fiber, or the like. In the present embodiment, the outer shape size of the anode power feeder 122b is, for example, the same as the outer shape size of the anode catalyst layer 122a.

FIG. 3 is an exploded perspective view showing a part of the electrolytic cell stack 10. The electrolytic cell stack 10 includes, for example, a first collector 41, a second collector 42, a first insulating material 43, a second insulating material 44, a first end plate 45, and a second end plate 46 in addition to the above-described configuration. In FIG. 3, the first flow path portions 13 and 13' and the second flow path portions 14 and 14' described later are not shown.

### (First Collector)

The first collector 41 is an electrical connection portion that transmits a negative voltage applied from the power supply unit 30 to the first separator 11a, the third separator 11c, and the fifth separator 11e. That is, the first collector 41 is electrically connected to each of the first separator 11a, the third separator 11c, and the fifth separator 11e (details of the connections are not shown). A negative voltage required for the electrolysis in each electrolytic cell 12 is applied to the first collector 41 from the power supply unit 30. The first collector 41 is formed of a metal plate member (for example, a copper plate) or the like.

### (Second Collector)

The second collector 42 is an electrical connection portion that transmits a positive voltage applied from the power supply unit 30 to the second separator 11b and the fourth separator 11d. That is, the second collector 42 is electrically connected to each of the second separator 11b and the fourth separator 11d. A positive voltage required for the electrolysis in each electrolytic cell 12 is applied to the second collector 42 from the power supply unit 30. The second collector 42 is formed of a metal plate member (for example, a copper plate) or the like.

### (First Insulating Material)

The first insulating material 43 is located between the first collector 41 and the first end plate 45. An outer shape size of the first insulating material 43 is, for example, the same as the outer shape size of the first collector 41 or larger than the outer shape size of the first collector 41.

### (Second Insulating Material)

The second insulating material 44 is located between the second collector 42 and the second end plate 46. An outer shape size of the second insulating material 44 is the same as the outer shape size of the second collector 42 or larger than the outer shape size of the second collector 42.

### (First End Plate)

The first end plate 45 is located on a side opposite to the first collector 41 with respect to the first insulating material 43. The first end plate 45 is formed of, for example, a metal plate member (for example, a stainless steel plate) or the like. An outer shape size of the first end plate 45 is, for example, larger than the outer shape size of the first insulating material 43.

### (Second End Plate)

The second end plate 46 is located on a side opposite to the second collector 42 with respect to the second insulating material 44. The second end plate 46 is formed of, for example, a metal plate member (for example, a stainless steel plate) or the like. An outer shape size of the second end plate 46 is, for example, larger than the outer shape size of the second insulating material 44.

Further, as shown in FIG. 2, the electrolytic cell stack 10 includes, for example, a first insulator 47, a second insulator 48, a support portion 50, and a sealing portion 60 in addition to the above-described configuration.

### (First Insulator)

The first insulator 47 insulates between an outer peripheral portion of the separator 11 on the one side dl and an outer peripheral portion of the separator 11 on the other side dr of the two adjacent separators 11. The first insulator 47 is a sheet member having a frame shape that is larger than outer shape sizes of the cathode catalyst layer 121a and the anode catalyst layer 122a and outer shape sizes of the cathode power feeder 121b and the anode power feeder 122b by one size.

The first insulator 47 is attached to the first inner surface 110a of each of the separators 11 other than the fifth separator 11e among the plurality of separators 11, and covers an end portion of the first inner surface 110a from the other side dr. A material of the first insulator 47 is not particularly limited as long as it is an insulating material, and is, for example, a sheet-shaped resin such as polytetrafluoroethylene (PTFE). In addition, a hole 47h1 penetrating in the first direction D1 is formed in a portion of the first insulator 47 close to the first end portion 111 of the separator 11, and the first flow path portion 13 described later is inserted into the hole 47h1. A hole 47h2 penetrating in the first direction D1 is formed in a portion of the first insulator 47 close to the second end portion 112 of the separator 11, and the second flow path portion 14 described later is inserted into the hole 47h2.

### (Second Insulator)

The second insulator 48 insulates between an outer peripheral portion of the separator 11 on the one side dl and an outer peripheral portion of the separator 11 on the other side dr of the two adjacent separators 11, similarly to the first insulator 47. The second insulator 48 is a sheet member having a frame shape that is larger than outer shape sizes of the anode catalyst layer 122a and the cathode catalyst layer 121a and outer shape sizes of the anode power feeder 122b and the cathode power feeder 121b by one size.

The second insulator 48 is attached to the second inner surface 110b of each of the separators 11 other than the first separator 11a among the plurality of separators 11, and covers an end portion of the second inner surface 110b from the one side dl. A material of the second insulator 48 is not particularly limited as long as it is an insulating material, and is, for example, a sheet-shaped resin such as PTFE. In addition, a hole 48h1 penetrating in the first direction D1 is formed in a portion of the second insulator 48 close to the first end portion 111 of the separator 11, and the first flow path portion 13 described later is inserted into the hole 48h1. A hole 48h2 penetrating in the first direction D1 is formed in a portion of the second insulator 48 close to the second end portion 112 of the separator 11, and the second flow path portion 14 described later is inserted into the hole 48h2. The first insulator 47 and the second insulator 48 can be used as an integrated insulator.

### (Support Portion)

The support portion 50 is a member that supports the electrolytic cell 12 between the two adjacent separators 11. The support portion 50 is disposed between the two adjacent separators 11. The support portion 50 is located, for example, on an inner side (inner peripheral side) of the outer edge portion 120e of the ion exchange membrane 120, and supports the ion exchange membrane 120. The term "outer edge portion 120e" in the present specification means an edge portion that is spaced from the central portion C of the electrolytic cell 12 in a direction (for example, the X direction or the Y direction) orthogonal to the thickness direction (Z direction) of the electrolytic cell 12. In addition, the terms "inner side" or "inner peripheral side" in the present specification mean an inner side (a side close to the central portion C) as viewed from the central portion C of the electrolytic cell 12. In the present embodiment, the support portion 50 includes, for example, a first support portion 51 and a second support portion 52.

### (First Support Portion)

The first support portion 51 is a support portion located on the one side dl with respect to the ion exchange membrane 120. The first support portion 51 is disposed between the first inner surface 110a of the separator 11 located on the one side dl with respect to the ion exchange membrane 120 and the first surface 120a of the ion exchange membrane 120. The first support portion 51 is located on an inner side (inner peripheral side) of the outer edge portion 120e of the ion exchange membrane 120. The first support portion 51 is interposed between the first inner surface 110a (or the first insulator 47) of the separator 11 and the first surface 120a of the ion exchange membrane 120 at a position on an outer side (outer peripheral side) of the cathode 121 or the anode 122, and supports the ion exchange membrane 120 with respect to the first inner surface 110a of the separator 11. The first support portion 51 is formed in an annular shape (for example, a frame shape) along the outer edge portion 120e of the ion exchange membrane 120 and is smaller than the outer edge portion 120e of the ion exchange membrane 120 by one size.

### (Second Support Portion)

The second support portion 52 is a support portion located on the other side dr with respect to the ion exchange membrane 120. The second support portion 52 is disposed between the second inner surface 110b of the separator 11 located on the other side dr with respect to the ion exchange membrane 120 and the second surface 120b of the ion exchange membrane 120. The second support portion 52 is located on an inner side (inner peripheral side) of the outer edge portion 120e of the ion exchange membrane 120. The second support portion 52 is interposed between the second inner surface 110b (or the second insulator 48) of the separator 11 and the second surface 120b of the ion exchange membrane 120 at a position on an outer side (outer peripheral side) of the anode 122 or the cathode 121, and supports the ion exchange membrane 120 with respect to the second inner surface 110b of the second separator 11b. The second support portion 52 is formed in an annular shape (for example, a frame shape) along the outer edge portion 120e of the ion exchange membrane 120 and is smaller than the outer edge portion 120e of the ion exchange membrane 120 by one size.

### (Sealing Portion)

The sealing portion 60 is a member that closes the internal space S between the two adjacent separators 11. The sealing portion 60 is disposed between the two adjacent separators 11. The sealing portion 60 is located on an outer side (outer peripheral side) of the outer edge portion 120e of the ion exchange membrane 120 and seals the internal space S.

In the present embodiment, the sealing portion 60 includes a first sealing portion 61 and a second sealing portion 62. The first sealing portion 61 and the second sealing portion 62 may be integrally formed. That is, the first sealing portion 61 and the second sealing portion 62 may be one member. In addition, the sealing portion 60 may be integrally formed with at least one of the first insulator 47 or the second insulator 48 described above.

### (First Sealing Portion)

The first sealing portion 61 is a sealing portion located near the separator 11 on the one side dl of the two adjacent separators 11. The first sealing portion 61 is located on an outer side (outer peripheral side) of the outer edge portion 120e of the ion exchange membrane 120. The first sealing portion 61 is interposed between the first inner surface 110a of the separator 11 located on the one side dl with respect to the ion exchange membrane 120 and the second sealing portion 62, and seals a part of the outer peripheral side of the internal space S. In the present embodiment, the first sealing portion 61 is interposed between the first insulator 47 attached to the first inner surface 110a and the second sealing portion 62. The first sealing portion 61 is formed in an annular shape (for example, a frame shape) along the outer edge portion 120e of the ion exchange membrane 120 and is smaller than the outer edge portion 120e of the ion exchange membrane 120 by one size.

### (Second Sealing Portion)

The second sealing portion 62 is a sealing portion located near the separator 11 on the other side dr of the two adjacent separators 11. The second sealing portion 62 is located on an outer side of the outer edge portion 120e of the ion exchange membrane 120. The second sealing portion 62 is interposed between the second inner surface 110b of the separator 11 located on the other side dr with respect to the ion exchange membrane 120 and the first sealing portion 61, and seals a part of the outer peripheral side of the internal space S. In the present embodiment, the second sealing portion 62 is interposed between the second insulator 48 attached to the second inner surface 110b and the first sealing portion 61. The second sealing portion 62 is formed in an annular shape (for example, a frame shape) along the outer edge portion 120e of the ion exchange membrane 120 and is larger than the outer edge portion 120e of the ion exchange membrane 120 by one size.

### (Action and Effect)

The electrolytic cell 12 disposed between the two adjacent separators 11 electrolyzes the supplied electrolyte Es in a case where the electrolyte Es is supplied to the electrolyte flow path portion FP provided in the separator 11. The electrolyte Es flowing in the pipe portion 130 for supplying the electrolyte Es to the electrolyte flow path portion FP in the first direction D1 sequentially flows into the electrolyte flow path portions FP arranged in the first direction D1, and thus the pressure may fluctuate in the flow direction. Specifically, the pressure of the electrolyte Es may decrease toward the downstream side in the flow direction of the electrolyte Es. Therefore, the amount of the electrolyte Es flowing into the electrolyte flow path portion FP decreases toward the downstream side in the flow direction. In a case where the electrolyte Es is not uniformly supplied to each electrolytic cell 12, in the electrolytic cell 12 with a small amount of the electrolyte Es supplied, the heat generated by the electrolysis is not dissipated by the electrolyte Es, and thus the temperature of the electrolytic cell 12 may rise and the electrolytic cell 12 may be damaged. As one of the measures, it is considered to suppress the fluctuation of the pressure of the electrolyte Es by increasing a diameter of the pipe portion 130 or reducing a distance between the electrolytic cells 12. However, these measures have an action of reducing the electrical resistance of the electrolyte Es, and there is a problem that the stray current flowing between the electrolytic cells 12 increases. Therefore, in the present embodiment, each of the above-described configurations is adopted.

According to the above-described configuration, the first diffusion guide portion 208 and the first convergence guide portion 207 are provided in the first diffusion flow path 206 and the first convergence flow path 205, respectively. Further, the first diffusion flow path 206 and the first convergence flow path 205 are expanded in a trapezoidal shape from the first supply hole 203 and the first discharge hole 202. Therefore, the fluid flowing into the first diffusion flow path 206 from the first supply hole 203 flows toward the first groove portion 204 while spreading in the width direction according to the shape of the flow path. In this case, the fluid is guided by the first diffusion guide portion 208. As a result, the fluid flows in a state of being uniformly dispersed toward the first groove portion 204. Therefore, it is possible to stably cause the electrolysis reaction over the entire region of the first groove portion 204. In addition, the fluid after passing through the first groove portion 204 is guided by the first convergence guide portion 207 in the first convergence flow path 205. As a result, the fluid can be circulated while being smoothly converged toward the first discharge hole 202. Therefore, the amount of hydrogen generated per unit time can be significantly increased as compared with the related art. As a result, it is possible to further improve the hydrogen production efficiency of the electrolytic device 1 using the separator 11.

According to the above-described configuration, the plurality of first diffusion guide portions 208 are arranged in a radial shape around the first supply hole 203. As a result, the fluid flowing out from the first supply hole 203 is uniformly dispersed in the width direction while flowing toward the first groove portion 204. Therefore, it is possible to evenly spread the fluid over the entire region of the first groove portion 204. Similarly, the fluid after passing through the first groove portion 204 is guided by the first convergence guide portion 207 in the first convergence flow path 205. As a result, the fluid can be circulated while being smoothly converged toward the first discharge hole 202. Therefore, the amount of hydrogen generated per unit time can be significantly increased as compared with the related art. As a result, it is possible to further improve the hydrogen production efficiency of the electrolytic device 1 using the separator 11.

Here, in the first groove portion 204, hydrogen is generated by the electrolysis of water, and thus the volume of the fluid supplied from the first supply hole 203 increases by the volume of the hydrogen. According to the above-described configuration, since the diameter dimension of the first discharge hole 202 is larger than the diameter dimension of the first supply hole 203, the fluid can be led to the outside from the first discharge hole 202 without causing a pressure loss or a flow loss of the fluid even in a case where the volume is increased. As a result, it is possible to more efficiently and smoothly proceed with the hydrogen generation by the electrolytic device 1 using the separator 11.

Here, a configuration in which hydrogen is generated on the first groove portion 204 side and oxygen is generated on the second groove portion 212 side is considered. In this case, mainly, the difference in the number of molecules generated between hydrogen and oxygen requires a larger dimension in the width direction in the second groove portion 212 under the same length. According to the above-described configuration, the dimension of the second groove portion 212 in the width direction is larger than the dimension of the first groove portion 204 in the width direction. As a result, it is possible to efficiently and stably generate hydrogen and oxygen, respectively. Therefore, the amount of hydrogen generated per unit time can be significantly increased as compared with the related art. As a result, it is possible to further improve the hydrogen production efficiency of the electrolytic device 1 using the separator 11.

### (Other Embodiments)

The embodiment of the present disclosure has been described in detail above with reference to the drawings. However, the specific configuration is not limited to the embodiment, and includes design changes and the like without departing from the gist of the present disclosure. For example, the number of the first groove portions 204 or the second groove portions 212 is merely an example, and can be appropriately changed according to the design or the specification. Similarly, the number or the angle of the first diffusion guide portions 208 and the first convergence guide portions 207 can be appropriately changed according to the design or the specification. In either case, the same action and effect as those described above can be obtained.

### <Additional Notes>

The separator 11 and the electrolytic device 1 according to each embodiment are, for example, understood as follows.

(1) A separator 11 according to a first aspect includes a separator body 201 that has a rectangular plate shape and includes a first surface 201a facing one side in a thickness direction and a second surface 201b facing the other side in the thickness direction, a first supply hole 203 and a first discharge hole 202 that are formed on one diagonal line of the separator body 201 in the first surface 201a and that penetrate the separator body 201 from the first surface 201a toward the second surface 201b, a plurality of first groove portions 204 that are formed in a region between the first supply hole 203 and the first discharge hole 202, that extend in a longitudinal direction of the separator body 201, and that are arranged at intervals in a width direction orthogonal to the longitudinal direction, a trapezoidal first diffusion flow path 206 that is expanded between the first supply hole 203 and the first groove portion 204 and is recessed from a first surface 201a side toward a second surface 201b side, and in which a dimension in the width direction is gradually enlarged from the first supply hole 203 toward the first groove portion 204 as viewed from the first surface 201a side, a trapezoidal first convergence flow path 205 that is expanded between the first groove portion 204 and the first discharge hole 202 and is recessed from the first surface 201a side toward the second surface 201b side, and in which a dimension in the width direction is gradually reduced from the first groove portion 204 toward the first discharge hole 202 as viewed from the first surface 201a side, a first diffusion guide portion 208 that is provided in the first diffusion flow path 206 and that guides a fluid from the first supply hole 203 to the first groove portion 204, and a first convergence guide portion 207 that is provided in the first convergence flow path 205 and that guides a fluid from the first groove portion 204 to the first discharge hole 202.

According to the above-described configuration, the first diffusion guide portion 208 and the first convergence guide portion 207 are provided in the first diffusion flow path 206 and the first convergence flow path 205, respectively. Further, the first diffusion flow path 206 and the first convergence flow path 205 are expanded in a trapezoidal shape from the first supply hole 203 and the first discharge hole 202. Therefore, the fluid flowing into the first diffusion flow path 206 from the first supply hole 203 flows toward the first groove portion 204 while spreading in the width direction according to the shape of the flow path. In this case, the fluid is guided by the first diffusion guide portion 208. As a result, the fluid flows in a state of being uniformly dispersed toward the first groove portion 204. Therefore, it is possible to stably cause the electrolysis reaction over the entire region of the first groove portion 204. In addition, the fluid after passing through the first groove portion 204 is guided by the first convergence guide portion 207 in the first convergence flow path 205. As a result, the fluid can be circulated while being smoothly converged toward the first discharge hole 202.

(2) A separator 11 according to a second aspect is the separator 11 according to (1), in which a plurality of the first diffusion guide portions 208 are arranged in a radial shape around the first supply hole 203, and a plurality of the first convergence guide portions 207 are arranged in a radial shape around the first discharge hole 202.

According to the above-described configuration, the plurality of first diffusion guide portions 208 are arranged in a radial shape around the first supply hole 203. As a result, the fluid flowing out from the first supply hole 203 is uniformly dispersed in the width direction while flowing toward the first groove portion 204. Therefore, it is possible to evenly spread the fluid over the entire region of the first groove portion 204. Similarly, the fluid after passing through the first groove portion 204 is guided by the first convergence guide portion 207 in the first convergence flow path 205. As a result, the fluid can be circulated while being smoothly converged toward the first discharge hole 202.

(3) A separator 11 according to a third aspect is the separator 11 according to (1) or (2), in which a diameter dimension of the first discharge hole 202 is larger than a diameter dimension of the first supply hole 203.

Here, in the first groove portion 204, hydrogen is generated by the electrolysis of water, and thus the volume of the fluid supplied from the first supply hole 203 increases by the volume of the hydrogen. According to the above-described configuration, since the diameter dimension of the first discharge hole 202 is larger than the diameter dimension of the first supply hole 203, the fluid can be led to the outside from the first discharge hole 202 without causing a pressure loss or a flow loss of the fluid even in a case where the volume is increased.

(4) A separator 11 according to a fourth aspect is the separator 11 according to any one of (1) to (3), further including a second groove portion 212 that is formed on the second surface 201b, in which a dimension of the second groove portion 212 in the width direction is larger than a dimension of the first groove portion 204 in the width direction.

Here, a configuration in which hydrogen is generated on the first groove portion 204 side and oxygen is generated on the second groove portion 212 side is considered. In this case, mainly, the difference in the number of molecules generated between hydrogen and oxygen requires a larger dimension in the width direction in the second groove portion 212 under the same length. According to the above-described configuration, the dimension of the second groove portion 212 in the width direction is larger than the dimension of the first groove portion 204 in the width direction. As a result, it is possible to efficiently and stably generate hydrogen and oxygen, respectively.

(5) A separator 11 according to a fifth aspect is the separator 11 according to any one of (1) to (4), in which an angle formed by a hypotenuse of the first diffusion flow path 206 that faces the first supply hole 203 from the width direction with respect to the width direction is 24° or more and 50° or less.

According to the above-described configuration, the fluid flowing into the first diffusion flow path 206 from the first supply hole 203 flows toward the first groove portion 204 while spreading in the width direction according to the shape of the flow path. In this case, the fluid is guided by the first diffusion guide portion 208. As a result, the fluid flows in a state of being uniformly dispersed toward the first groove portion 204. Therefore, it is possible to stably cause the electrolysis reaction over the entire region of the first groove portion 204.

(6) A separator 11 according to a sixth aspect is the separator 11 according to any one of (1) to (5), in which a diameter dimension of the first discharge hole 202 is 1.4 times to 5.5 times a diameter dimension of the first supply hole 203.

Here, in the first groove portion 204, hydrogen is generated by the electrolysis of water, and thus the volume of the fluid supplied from the first supply hole 203 increases by the volume of the hydrogen. According to the above-described configuration, since the diameter dimension of the first discharge hole 202 is larger than the diameter dimension of the first supply hole 203, the fluid can be led to the outside from the first discharge hole 202 without causing a pressure loss or a flow loss of the fluid even in a case where the volume is increased.

(7) A separator 11 according to a seventh aspect is the separator 11 according to (4), in which the dimension of the first groove portion 204 in the width direction is 1/2 or less of the dimension of the second groove portion 212 in the width direction.

Here, a configuration in which hydrogen is generated on the first groove portion 204 side and oxygen is generated on the second groove portion 212 side is considered. In this case, mainly, the difference in the number of molecules generated between hydrogen and oxygen requires a larger dimension in the width direction in the second groove portion 212 under the same length. According to the above-described configuration, the dimension of the second groove portion 212 in the width direction is larger than the dimension of the first groove portion 204 in the width direction. As a result, it is possible to efficiently and stably generate hydrogen and oxygen, respectively.

(8) An electrolytic device (1) according to an eighth aspect includes an electrolytic cell stack 10, an electrolyte supply unit 20 that supplies an electrolyte to the electrolytic cell stack 10, and a power supply unit 30 that applies a voltage to the electrolytic cell stack 10, in which the electrolytic cell stack 10 includes the separators 11 according to any one of (1) to (7) that are arranged at intervals in the thickness direction, and a plurality of electrolytic cells 12 that are disposed one by one between two adjacent separators 11.

According to the above-described configuration, it is possible to stably generate a large amount of hydrogen more efficiently.

### Industrial Applicability

According to the present disclosure, it is possible to provide a separator and an electrolytic device that can more stably generate a large amount of hydrogen.

### Reference Signs List

1: electrolytic device
10: electrolytic cell stack
11: separator
11a: first separator
11b: second separator
11c: third separator
11d: fourth separator
11e: fifth separator
11h1, 11h3: first insertion hole
11h2, 11h4: second insertion hole
12: electrolytic cell
12a: first electrolytic cell
12b: second electrolytic cell
12c: third electrolytic cell
12d: fourth electrolytic cell
13, 13': first flow path portion
13o, 13o', 14o, 14o': outlet
14, 14': second flow path portion
15: first structure
16: second structure
20: electrolyte supply unit
21: hydrogen gas-liquid separation device
22: first pump
23: hydrogen recovery unit
24: first electrolyte supply unit
26: oxygen gas-liquid separation device
27: second pump
28: oxygen recovery unit
29: second electrolyte supply unit
30: power supply unit
41: first collector
42: second collector
43: first insulating material
44: second insulating material
45: first end plate
46: second end plate
47: first insulator
47h1, 47h2, 48h1, 48h2: hole
48: second insulator
50: support portion
51: first support portion
52: second support portion
60: sealing portion
61: first sealing portion
62: second sealing portion
110a: first inner surface
110b: second inner surface
111: first end portion
112: second end portion
120: ion exchange membrane
120a: first surface
120b: second surface
120e: outer edge portion
121: cathode
121a: cathode catalyst layer
121b: cathode power feeder
122: anode
122a: anode catalyst layer
122b: anode power feeder
130, 130', 140, 140': pipe portion
150, 150a, 150b, 150c, 160: cutout portion
151: mesh member
151a: first mesh member
151b: second mesh member
151c: third mesh member
151d: fourth mesh member
152, 153: conductive mesh
201: separator body
201a: first surface
201b: second surface
202: first discharge hole
203: first supply hole
204: first groove portion
205: first convergence flow path
206: first diffusion flow path
207: first convergence guide portion
208: first diffusion guide portion
209: straight section
211: second supply hole
210: second discharge hole
212: second groove portion
C: central portion
D1: first direction
dl: one side
dr: other side
Es: electrolyte
L1, L1', L2, L2': pipe line
S: internal space
S1: gap
Sa: cathode chamber
Sb: anode chamber

## Claims

1. A separator comprising:
a separator body that has a rectangular plate shape and includes a first surface facing one side in a thickness direction and a second surface facing the other side in the thickness direction;
a first supply hole and a first discharge hole that are formed on one diagonal line of the separator body in the first surface and that penetrate the separator body from the first surface toward the second surface;
a plurality of first groove portions that are formed in a region between the first supply hole and the first discharge hole, that extend in a longitudinal direction of the separator body, and that are arranged at intervals in a width direction orthogonal to the longitudinal direction;
a trapezoidal first diffusion flow path that is expanded between the first supply hole and the first groove portion and is recessed from a first surface side toward a second surface side, and in which a dimension in the width direction is gradually enlarged from the first supply hole toward the first groove portion as viewed from the first surface side;
a trapezoidal first convergence flow path that is expanded between the first groove portion and the first discharge hole and is recessed from the first surface side toward the second surface side, and in which a dimension in the width direction is gradually reduced from the first groove portion toward the first discharge hole as viewed from the first surface side;
a first diffusion guide portion that is provided in the first diffusion flow path and that guides a fluid from the first supply hole to the first groove portion; and
a first convergence guide portion that is provided in the first convergence flow path and that guides a fluid from the first groove portion to the first discharge hole.

2. The separator according to Claim 1, wherein
a plurality of the first diffusion guide portions are arranged in a radial shape around the first supply hole, and a plurality of the first convergence guide portions are arranged in a radial shape around the first discharge hole.

3. The separator according to Claim 1 or 2, wherein
a diameter dimension of the first discharge hole is larger than a diameter dimension of the first supply hole.

4. The separator according to Claim 1 or 2, further comprising:
a second groove portion that is formed on the second surface, wherein
a dimension of the second groove portion in the width direction is larger than a dimension of the first groove portion in the width direction.

5. The separator according to Claim 1 or 2, wherein
an angle formed by a hypotenuse of the first diffusion flow path that faces the first supply hole from the width direction with respect to the width direction is 24° or more and 50° or less.

6. The separator according to Claim 1 or 2, wherein
a diameter dimension of the first discharge hole is 1.4 times to 5.5 times a diameter dimension of the first supply hole.

7. The separator according to Claim 4, wherein
the dimension of the first groove portion in the width direction is 1/2 or less of the dimension of the second groove portion in the width direction.

8. An electrolytic device comprising:
an electrolytic cell stack;
an electrolyte supply unit that supplies an electrolyte to the electrolytic cell stack; and
a power supply unit that applies a voltage to the electrolytic cell stack, wherein
the electrolytic cell stack includes
the separators according to Claim 1 or 2 that are arranged at intervals in the thickness direction, and
a plurality of electrolytic cells that are disposed one by one between two adjacent separators.
